# NEUE EUROPÄISCHE PATENTSCHRIFT

(11) **EP 3 393 807 B2**
(45) Veröffentlichungstag und Bekanntmachung des Hinweises auf die Entscheidung über den Einspruch: **05.11.2025**
(45) Hinweis auf die Patenterteilung: 06.10.2021
(21) Anmeldenummer: 17702110.2
(22) Anmeldetag: 31.01.2017
(51) Int. Cl.: B29C 64/153, B29C 64/371, B22F 10/20, B22F 10/30, B22F 10/70, B22F 12/00, B33Y 10/00, B33Y 30/00, B33Y 40/00, B33Y 50/02

(54) **VORRICHTUNG UND VERFAHREN ZUM HERSTELLEN EINES DREIDIMENSIONALEN OBJEKTS**
DEVICE AND METHOD FOR PRODUCING A THREE-DIMENSIONAL OBJECT
DISPOSITIF ET PROCÉDÉ POUR PRODUIRE UN OBJET TRIDIMENSIONNEL

(30) Priorität: 05.02.2016 DE 102016201812
(43) Veröffentlichungstag der Anmeldung: 31.10.2018
(73) Patentinhaber: EOS GmbH Electro Optical Systems, 82152 Krailling (DE)
(72) Erfinder: FEY, Georg, 80336 München (DE); HEUGEL, Martin, 86899 Landsberg am Lech (DE); FRIEDEL, Sebastian, 81737 München (DE); WOLF, Dominik, 80469 München (DE); SCHILLING, Alexander, 87499 Wildpoldsried (DE); STRÖBEL, Philip, 91746 Weidenbach (DE)
(74) Vertreter: Prüfer & Partner mbB Patentanwälte · Rechtsanwälte
(86) Internationale Anmeldenummer: PCT/EP2017/052016
(87) Internationale Veröffentlichungsnummer: WO 2017/134044

(56) Entgegenhaltungen:
- EP-A1- 1 514 622
- EP-A1- 2 774 703
- DE-A1- 102014 207 160
- US-A1- 2011 291 331
- US-A1- 2014 140 882

## Beschreibung

Die vorliegende Erfindung bezieht sich auf eine Vorrichtung und ein Verfahren zum Herstellen eines dreidimensionalen Objekts durch schichtweises Aufbringen und selektives Verfestigen eines Aufbaumaterials. Vorrichtungen und Verfahren dieser Art werden beispielsweise beim Rapid Prototyping, Rapid Tooling und Additive Manufacturing verwendet. Ein Beispiel eines solchen Verfahrens ist als "selektives Lasersintern" oder "selektives Laserschmelzen" bekannt. Dabei wird wiederholt eine dünne Schicht eines pulverförmigen Aufbaumaterials auf ein Baufeld aufgebracht und das Aufbaumaterial in jeder Schicht durch selektives Bestrahlen mit einem Laserstrahl selektiv verfestigt, d. h. das Aufbaumaterial wird an diesen Stellen an- oder aufgeschmolzen und erstarrt unter Bildung eines Materialverbundes.

Die Druckschrift DE 195 14 740 C1 beschreibt ein Verfahren zum Herstellen eines dreidimensionalen Objekts mittels selektiven Lasersinterns oder selektiven Laserschmelzens sowie eine Vorrichtung zum Durchführen dieses Verfahrens.

Beim Verfestigen von Aufbaumaterial entstehen je nach Art des verwendeten Materials, insbesondere beim Sintern oder Schmelzen von Metallpulver, sogenannte Spratzer. Bei der Bildung von Spratzern wird Material aus der an- oder aufgeschmolzenen Stelle herausgerissen. Auch Rauch, Kondensate und/oder andere Stoffe werden an der Verfestigungsstelle freigesetzt. Gebildete Spratzer, Rauch und Kondensate sowie sonstige freigesetzte Stoffe können zu Verschmutzungen der Vorrichtung führen. Gebildete Spratzer, Rauch und Kondensate sowie sonstige freigesetzte Stoffe führen darüber hinaus zu einer teilweisen Absorption und/oder teilweisen Streuung und damit zu einem teilweisen Verlust der zu dessen selektiver Verfestigung auf das Aufbaumaterial gerichteten Strahlung. Um solche Verschmutzungen aus der Prozesskammer zu entfernen, schlägt die Druckschrift DE 198 53 947 C1 eine Prozesskammer vor, bei der an zwei gegenüberliegenden Enden eine Öffnung für den Schutzgas-Einlass und eine Öffnung für den Schutzgas-Auslass angeordnet sind, durch die ein gerichteter Schutzgasstrom durch die Prozesskammer hindurch erzeugt wird.

In der EP 2 774 703 A1 ist eine Vorrichtung zum Herstellen dreidimensionaler Werkstücke beschrieben. Die Vorrichtung weist eine Prozesskammer auf, in der ein Träger, eine Pulverauftragsvorrichtung und eine Bestrahlungsvorrichtung zum selektiven Bestrahlen von auf den Träger aufgebrachtem Pulver-Rohmaterial untergebracht sind. Die Prozesskammer kann gegenüber der Umgebungsatmosphäre abgedichtet werden und ist eingerichtet, bei einem erhöhten Druck gehalten zu werden, der höher als der Umgebungsdruck ist.

In der US 2011/0291331 A1 ist eine Vorrichtung zum Herstellen eines dreidimensionalen Objekts durch schichtweises Verfestigen von Pulver beschrieben. Die Vorrichtung umfasst eine absenkbare Bauplattform, die das Objekt während der Herstellung trägt, und eine abdichtbare Kammer, um die Atmosphäre um das Objekt herum zu kontrollieren. Die Vorrichtung verfügt ferner über Gastransportvorrichtungen wie Pumpen und Ventile, die im Wesentlichen alle unter kontrollierter Atmosphäre gehalten werden.

In der US 2014/140882 A1 sind eine Vorrichtung und ein Verfahren zur Herstellung eines dreidimensionalen Objekts durch additive Schichtherstellung beschrieben. Während der Bestrahlungsschritte wird in der Kammer eine Gasatmosphäre aufrechterhalten. Dabei wird unter anderem der Druck und/oder die Zusammensetzung der Gasatmosphäre so gesteuert, dass sich während der Bestrahlung der Schichten mindestens zwei unterschiedliche Gasatmosphären mit unterschiedlichen vorbestimmten Drücken und/oder Zusammensetzungen in der Kammer befinden.

Um Schutzgas zu sparen, wird in der Regel eine sogenannte Umluftfiltereinrichtung verwendet, in der das aus der Prozesskammer kommende Schutzgas in einer Filtereinrichtung gereinigt wird und das gefilterte Schutzgas der Prozesskammer erneut zugeführt wird. Eine solche Umluftfiltereinrichtung zeichnet sich also durch einen geschlossenen Gaskreislauf aus. "Umluft" bedeutet in diesem Zusammenhang nicht, dass Luft in dem System zirkuliert, sondern wird allgemein für jedes System mit geschlossenem Gaskreislauf verwendet.

Im Betrieb verschmutzt ein Filterelement der Umluftfiltereinrichtung, da sich die aus dem Gas herauszufilternden Stoffe am Filterelement absetzen. Von Zeit zu Zeit muss ein Filterelement der Umluftfiltereinrichtung gereinigt werden. Eine Vorrichtung zum Herstellen eines dreidimensionalen Objekts durch schichtweises Aufbringen und selektives Verfestigen von Aufbaumaterial, bei der ein Filterelement einer Umluftfiltereinrichtung mittels eines Druckstoßes abgereinigt werden kann, ist aus der Druckschrift DE 10 2014 207 160 A1 bekannt.

Der Strömungswiderstand eines Filterelements verändert sich, wenn sich die aus dem Gas herauszufilternden Stoffe am Filterelement absetzen: der Strömungswiderstand steigt mit zunehmender Verschmutzung des Filterelements. Der Strömungswiderstand eines Filterelements ändert sich auch als Folge seiner Abreinigung, er ist nach der Abreinigung niedriger als im Neuzustand des Filterelements.

Nachteilig an den bekannten Vorrichtungen zum Herstellen eines dreidimensionalen Objekts durch schichtweises Aufbringen und selektives Verfestigen von Aufbaumaterial, welche über eine Umluftfiltereinrichtung verfügen, ist, dass es in Folge der Änderung des Strömungswiderstands in der Umluftfiltereinrichtung zu (teilweise abrupten) Änderungen des Drucks in der Prozesskammer kommt. In Folge der Änderungen des Drucks in der Prozesskammer können Bauteile der Vorrichtung ihre Form und/oder relative Lage zueinander verändern. Die sich verformenden Bauteile verformen sich bei den typischerweise auftretenden Druckänderungen typischerweise elastisch. Dadurch dass Bauteile sich verformen, kommt es zu Ungenauigkeiten in den Abmessungen des herzustellenden Objekts, d.h. zu Beeinträchtigungen der Maßhaltigkeit eines herzustellenden Objekt, sowie zu Störungen des Prozesses des Herstellens eines Objekts.

Eine Aufgabe der Erfindung besteht darin, eine verbesserte Vorrichtung und ein verbessertes Verfahren zum Herstellen eines dreidimensionalen Objekts durch schichtweises Aufbringen und selektives Verfestigen eines Aufbaumaterials bereitzustellen.

Die Aufgabe wird gelöst durch eine Vorrichtung gemäß Anspruch 1 und ein Verfahren gemäß Anspruch 12. Weiterbildungen der Erfindung sind jeweils in den Unteransprüchen angegeben, wobei die in den auf die Vorrichtung gerichteten Unteransprüchen genannten Merkmale auch als Weiterbildung des Verfahrens verstanden werden können.

Die erfindungsgemäße Vorrichtung und das erfindungsgemäße Verfahren ermöglichen unter anderem die Herstellung eines dreidimensionalen Objekts mit großer Genauigkeit. Durch die Erfindung wird insbesondere erreicht, dass die Grundplatte, auf der das Objekt aufzubauen ist bzw. auf der sich eine Bauplattform befindet, auf der das Objekt aufzubauen ist, und der Beschichter zum Auftragen des Aufbaumaterials in vertikaler Richtung exakter positioniert werden können. Dadurch lässt sich z.B. die Dicke der aufgebrachten Schichten exakter kontrollieren, was eine Voraussetzung dafür ist, dass die Abmessungen eines hergestellten Objekts präzise mit den gewünschten Abmessungen übereinstimmen. Dadurch wird beispielsweise weiter die Herstellung filigraner Objekte möglich.

Bei der erfindungsgemäßen Vorrichtung handelt es sich um eine Vorrichtung zum Herstellen eines dreidimensionalen Objekts durch schichtweises Verfestigen von Aufbaumaterial an den dem Querschnitt des herzustellenden Objekts in einer jeweiligen Schicht entsprechenden Stellen. Die Vorrichtung weist eine Prozesskammer, in der das Objekt durch selektives Verfestigen von Schichten eines Aufbaumaterials in einem Baufeld schichtweise aufzubauen ist, auf. Die Vorrichtung weist eine Gaszufuhreinrichtung auf. Die Vorrichtung weist eine Umluftfiltereinrichtung auf. Die Vorrichtung weist eine Druckkonstanthalteeinrichtung auf, die ausgebildet ist, den Druck, d.h. einen gewünschten (Prozesskammer-)Betriebsdruck, in der Prozesskammer im Wesentlichen konstant zu halten. Dadurch wird beispielsweise die Maßhaltigkeit eines herzustellenden Objekts verbessert.

Die Umluftfiltereinrichtung der erfindungsgemäßen Vorrichtung weist mindestens eine Filtereinrichtung und eine Pumpeinrichtung auf. Dadurch lässt sich beispielsweise ein einfacher modularer Aufbau der erfindungsgemäßen Vorrichtung erreichen.

Eine Filtereinrichtung der Umluftfiltereinrichtung der erfindungsgemäßen Vorrichtung ist abreinigbar, insbesondere durch einen der Gasdurchflußrichtung entgegengesetzten Gasdruckstoß abreinigbar. Dadurch ist beispielsweise eine rasche und gründliche Reinigung der Filtereinrichtung möglich. Insbesondere bei einer Filterabreinigung mit einem Druckstoß kam es nämlich bisher zu deutlichen Druckänderungen in der Prozesskammer, die mithilfe der Erfindung vermieden werden können.

Vorzugsweise weist die erfindungsgemäße Vorrichtung eine Verfestigungseinrichtung zum Verfestigen von Aufbaumaterial in der jeweiligen Schicht an dem Querschnitt des Objekts entsprechenden Positionen im Baufeld auf, welche eine Bestrahlungseinrichtung zum Ausstrahlen von elektromagnetischer Strahlung, insbesondere Laserstrahlung, und/oder zum Ausstrahlen von Teilchenstrahlung auf in der jeweiligen Schicht des Aufbaumaterials dem Querschnitt des Objekts entsprechende Positionen im Baufeld aufweist. Dadurch wird beispielsweise eine Vorrichtung zum selektiven Lasersintern oder selektiven Laserschmelzen bereitgestellt.

Vorzugsweise weist die erfindungsgemäße Vorrichtung eine Beschichtungseinrichtung auf, die ausgebildet ist, eine Schicht des Aufbaumaterials, insbesondere pulverförmigen Aufbaumaterials, auf das Baufeld aufzubringen. Dadurch wird beispielsweise eine Vorrichtung zum Herstellen eines Objekts ausgehend von Pulvermaterial bereitgestellt. Insbesondere der Abstand zwischen einer derartigen Beschichtungseinrichtung und einem Baufeld wird nämlich infolge einer Druckänderung verändert, was zu Ungenauigkeiten der Dicke einer aufzubringenden Schicht des Aufbaumaterials führen kann.

Vorzugsweise weist die Druckkonstanthalteeinrichtung der erfindungsgemäßen Vorrichtung eine Gaszufuhreinstelleinrichtung zum Verändern der pro Zeiteinheit von der Gaszufuhreinrichtung in die Prozesskammer einströmenden Gasmenge auf. Dadurch kann beispielsweise die pro Zeiteinheit von der Gaszufuhreinrichtung in die Prozesskammer einströmende Gasmenge gezielt dosiert werden. Außerdem kann eine solche Gaszufuhreinstelleinrichtung zur alleinigen (oder kombinierten) Druckregelung beitragen. Weiterhin ist es mithilfe einer solchen Gaszufuhreinstelleinrichtung auch möglich, eine Konzentration eines bestimmten Stoffs innerhalb des Gases (etwa eine Sauerstoffkonzentration in einem Gasgemisch) definiert und kontrolliert bereit zu stellen.

Vorzugsweise weist die Druckkonstanthalteeinrichtung der erfindungsgemäßen Vorrichtung eine Gasauslasseinstelleinrichtung zum Verändern der pro Zeiteinheit durch einen Gasauslass aus der Vorrichtung ausströmenden Gasmenge auf. Dadurch kann beispielsweise der Druck in der Prozesskammer auf einfache Weise im Wesentlichen konstant gehalten werden. Die Verwendungen einer Gaszufuhreinstelleinrichtung und einer Gasauslasseinstelleinrichtung können auch miteinander kombiniert werden, so dass eine zwischen diesen beiden genannten Einstelleinrichtungen abgestimmte Druckkonstanthaltung durchgeführt werden kann. Dabei kann dann beispielsweise die Gasauslasseinstelleinrichtung eine Art Sicherheitsfunktion erfüllen, um einen Druck in der Prozesskammer so zu begrenzen, dass er einen vordefinierten Grenzwert nicht überschreitet.

Vorzugsweise ist an der Prozesskammer der erfindungsgemäßen Vorrichtung ein Gasauslass angebracht. Dadurch ist es beispielsweise möglich, den Druck in der Prozesskammer rasch und genau einzustellen.

Vorzugsweise weist die erfindungsgemäße Vorrichtung einen Gasauslass auf, der in der Strömungsrichtung des Gases durch die Umluftfiltereinrichtung hinter der Filtereinrichtung angeordnet ist. Dadurch wird beispielsweise gewährleistet, dass Gas, welches aus der Vorrichtung abgelassen wird, keine Verschmutzung durch feste oder flüssige Stoffe aufweist. Im Rahmen dessen ist es dann auch möglich, das betreffende Gas mit verhätnismäßig niedrigem Druck (praktisch bis hin zu Atmosphärendruck) durch den Auslass zu führen, während das Gas in der Prozesskammer unter einem höheren Druck stehen kann. Ein solcher höherer Druck vermeidet u.a. auch ein unerwünschtes Eindringen von Luft (oder anderen Umgebungsgasen) in die Prozesskammer.

Vorzugsweise weist die Druckkonstanthalteeinrichtung der erfindungsgemäßen Vorrichtung eine der Umluftfiltereinrichtung zugeordnete Gasdurchflusseinstelleinrichtung mit veränderbarem Durchflusswiderstand auf. Dadurch ist es beispielsweise möglich, den Durchflusswiderstand der Umluftfiltereinrichtung im Wesentlichen konstant zu halten und die Pumpeinrichtung mit einer im Wesentlichen konstanten Leistung zu betreiben.

Vorzugsweise ist die der Umluftfiltereinrichtung der erfindungsgemäßen Vorrichtung zugeordnete Gasdurchflusseinstelleinrichtung in Strömungsrichtung des Gases vor der Pumpeinrichtung, insbesondere nach der Filtereinrichtung (bzw. nach mindestens einem Filterelement der Filtereinrichtung), angeordnet. Dadurch gelangt beispielsweise kein mit festen oder flüssigen Stoffen verunreinigtes Gas in die Pumpeinrichtung.

Vorzugsweise weist die erfindungsgemäße Vorrichtung eine Druckmesseinrichtung zum Messen des Drucks in der Prozesskammer auf. Dadurch wird beispielsweise die Möglichkeit für eine Regelung des Drucks in der Prozesskammer geschaffen, wodurch es ermöglicht wird, den Druck im Inneren der Prozesskammer bei geringem Gasverbrauch im Wesentlichen konstant zu halten.

Die erfindungsgemäße Vorrichtung weist eine Steuereinrichtung auf, die ausgebildet ist, die pro Zeiteinheit von der Gaszufuhreinrichtung in die Prozesskammer einströmende Gasmenge und die pro Zeiteinheit aus der Vorrichtung ausströmende Gasmenge und den Durchflusswiderstand der Gasdurchflusseinstelleinrichtung mit Hilfe der Druckkonstanthalteeinrichtung derart zu verändern, dass der Druck in der Prozesskammer im Wesentlichen konstant ist. Dadurch wird beispielsweise eine Steuereinrichtung bereitgestellt, die in der Lage ist, eine Vorrichtung zum Herstellen eines dreidimensionalen Objekts so zu steuern, dass sie das erfindungsgemäße Verfahren automatisch durchführt.

Die Druckkonstanthalteeinrichtung der erfindungsgemäßen Vorrichtung ist derart ausgebildet, den Druck in der Prozesskammer innerhalb von höchstens 10 Sekunden nach Abreinigung der Filtereinrichtung derart zu ändern, dass er im Wesentlichen denselben Wert hat wie vor der Abreinigung. Dadurch treten beispielsweise beim Herstellen eines dreidimensionalen Objekts keine längeren Pausen auf.

Beim erfindungsgemäßen Verfahren handelt es sich um ein Verfahren zum Herstellen eines dreidimensionalen Objekts durch schichtweises Verfestigen von Aufbaumaterial an den dem Querschnitt des herzustellenden Objekts in einer jeweiligen Schicht entsprechenden Stellen. Das Verfahren wird in einer Vorrichtung durchgeführt, die eine Prozesskammer, in der das Objekt durch selektives Verfestigen von Schichten eines Aufbaumaterials in einem Baufeld schichtweise aufgebaut wird, eine Gaszufuhreinrichtung, eine Umluftfiltereinrichtung und eine Druckkonstanthalteeinrichtung auf. Die Druckkonstanthalteinrichtung hält den Druck in der Prozesskammer im Wesentlichen konstant. Dadurch wird beispielsweise die Maßhaltigkeit eines herzustellenden Objekts verbessert.

Weitere Merkmale und Zweckmäßigkeiten der Erfindung ergeben sich aus der Beschreibung von Ausführungsbeispielen für die erfindungsgemäße Vorrichtung und das erfindungsgemäße Verfahren unter Bezugnahme auf die beigefügten Zeichnungen.
Fig. 1 ist eine schematische im Schnitt dargestellte Prinzipansicht einer Ausführungsform einer erfindungsgemäßen Vorrichtung zum schichtweisen Herstellen eines dreidimensionalen Objekts.
Fig. 2 ist ein Prinzipdiagramm einer Vorrichtung zum schichtweisen Herstellen eines dreidimensionalen Objekts gemäß einem nicht erfindungsgemäßen Beispiel .
Fig. 3 ist ein Prinzipdiagramm einer Vorrichtung zum schichtweisen Herstellen eines dreidimensionalen Objekts gemäß einem nicht erfindungsgemäßen Beispiel.
Fig. 4 ist ein Prinzipdiagramm einer Vorrichtung zum schichtweisen Herstellen eines dreidimensionalen Objekts gemäß einem dritten konkretisierten Ausführungsbeispiel der vorliegenden Erfindung.
Fig. 5 ist ein Prinzipdiagramm einer Vorrichtung zum schichtweisen Herstellen eines dreidimensionalen Objekts gemäß einem vierten konkretisierten Ausführungsbeispiel der vorliegenden Erfindung.

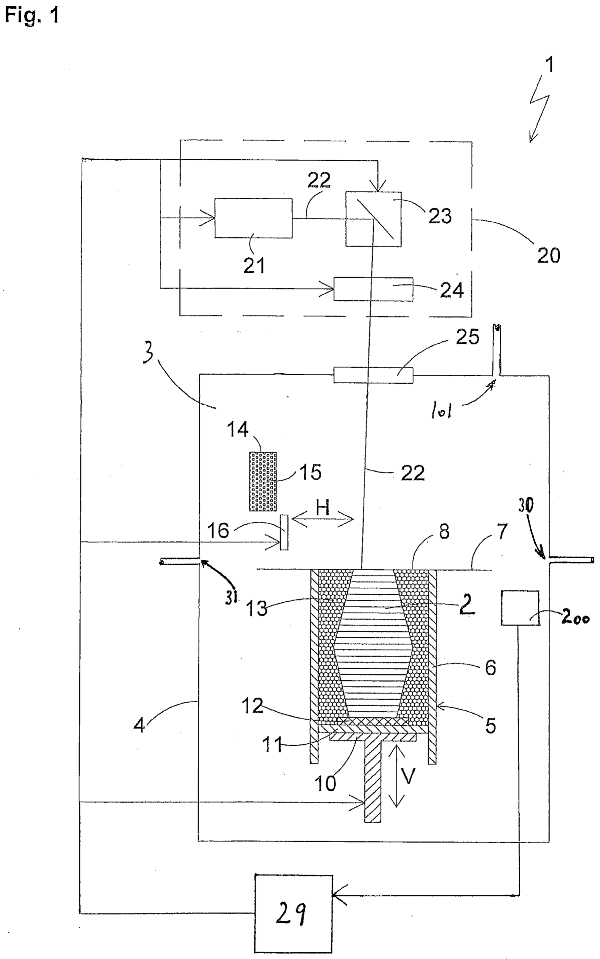

Die in Fig. 1 dargestellte Vorrichtung ist eine Lasersinter- oder Laserschmelzvorrichtung 1 zum Herstellen eines Objekts 2. Die zugehörige Gaszufuhreinrichtung 100 und die zugehörige Umluftfiltereinrichtung 32 sind in Fig. 1 der Übersichtlichkeit halber nicht eingezeichnet (vgl. die Folgefiguren).

Die Lasersinter- oder Laserschmelzvorrichtung 1 enthält eine Prozesskammer 3 mit einer Kammerwandung 4. In der Prozesskammer 3 ist ein nach oben offener Behälter 5 mit einer Wandung 6 angeordnet. In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selbst aufgebaut werden, die dann als Bauplattform dient.

In Fig. 1 ist das in dem Behälter 5 auf der Bauplattform 12 zu bildende Objekt 2 unterhalb einer Arbeitsebene 7 in einem Zwischenzustand dargestellt. Es besteht aus mehreren verfestigten Schichten und wird von unverfestigt gebliebenem Aufbaumaterial 13 umgeben.

Die Lasersinter- oder Laserschmelzvorrichtung 1 enthält weiter einen Vorratsbehälter 14 für ein durch elektromagnetische Strahlung verfestigbares pulverförmiges Aufbaumaterial 15 und eine in einer horizontalen Richtung H bewegbare Beschichtungseinrichtung 16 zum Aufbringen von Schichten des Aufbaumaterials 15 auf ein Baufeld 8 in der Arbeitsebene 7. An ihrer Oberseite enthält die Wandung 4 der Prozesskammer 3 ein Einkoppelfenster 25 zum Einkoppeln der Strahlung, die zum Verfestigen des Aufbaumaterials 15 dient, in die Prozesskammer 3.

Die Lasersinter- oder Laserschmelzvorrichtung 1 enthält ferner eine Verfestigungseinrichtung 20 mit einem Laser als Bestrahlungseinrichtung 21. Der Laser erzeugt einen Laserstrahl 22, der über eine Umlenkeinrichtung 23 umgelenkt und durch eine Fokussiereinrichtung 24 über das Einkoppelfenster 25 auf das Baufeld 8 in der Arbeitsebene 7 fokussiert wird.

Ferner enthält die Lasersinter- oder Laserschmelzvorrichtung 1 eine Steuereinrichtung 29, über die die einzelnen Bestandteile der Vorrichtung 1 in koordinierter Weise zum Durchführen des Bauprozesses gesteuert werden. Die Steuereinrichtung 29 kann eine CPU enthalten, deren Betrieb durch ein Computerprogramm (Software) gesteuert wird.

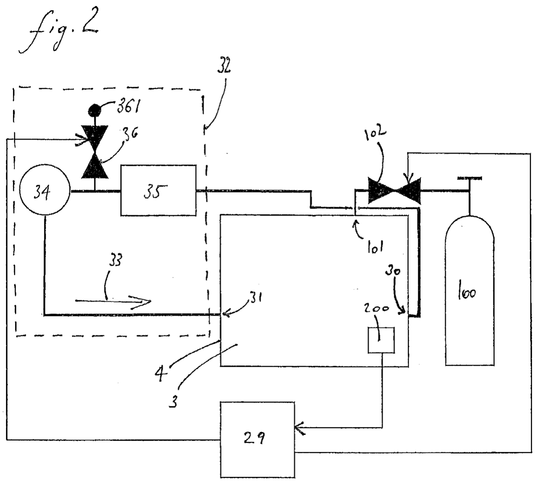

Wie in Fig. 2 gezeigt ist, ist die Prozesskammer 3 über eine Öffnung 101 mit einer Gaszufuhreinrichtung 100 verbunden. Bei der Gaszufuhreinrichtung 100 handelt es sich beispielsweise um einen Behälter für komprimiertes Gas. Zum Ändern des Durchflusses durch die Leitung, über die die Prozesskammer 3 und die Gaszufuhreinrichtung 100 miteinander verbunden sind, ist eine Gaszufuhreinstelleinrichtung 102 vorgesehen. Bei der Gaszufuhreinstelleinrichtung 102 handelt es sich beispielsweise um ein Stetigventil, insbesondere ein Proportional- oder Servoventil.

Die Prozesskammer 3 ist über Öffnungen 30, 31 mit einer Umluftfiltereinrichtung 32 verbunden, wobei Gas durch die Öffnung 30 aus der Prozesskammer 3 in die Umluftfiltereinrichtung 32 gelangt und Gas durch die Öffnung 31 aus der Umluftfiltereinrichtung 32 in die Prozesskammer 3 gelangt. Es können auch mehrere Öffnungen 30 und/oder 31 vorgesehen sein.

In den Figuren 2 bis 5 sind die Verfestigungseinrichtung und mit Ausnahme der Druckmesseinrichtung 200 die Bestandteile der Vorrichtung 1, die sich im Inneren der Prozesskammer 3 befinden, der Übersichtlichkeit halber nicht eingezeichnet.

Die Richtung, in der das der Prozesskammer 3 entnommene Gas die Umluftfiltereinrichtung 32 durchströmt (Gasdurchflussrichtung), ist in den Figuren 2 bis 4 durch einen Pfeil 33 angegeben. Das Gas wird von einer Pumpeinrichtung 34 in dieser Richtung durch die Umluftfiltereinrichtung 32 gefördert. Dabei durchströmt das Gas mindestens eine Filtereinrichtung 35.

In der Prozesskammer 3 ist mindestens eine Druckmesseinrichtung 200 zum Messen des Drucks in der Prozesskammer 3 angebracht. Bei der Druckmesseinrichtung kann es sich beispielsweise um einen piezoresistiven Drucksensor, einen kapazitiven Drucksensor oder einen induktiven Drucksensor handeln. Es ist möglich, dass beispielsweise in Folge der Strömung von Gas durch die Prozesskammer 3 der Druck nicht an allen Stellen in der Prozesskammer 3 gleich ist, es liegt dann eine geringfügig inhomogene Druckverteilung in der Prozesskammer 3 vor.

Unter "im Wesentlichen Konstanthalten des Drucks in der Prozesskammer" wird verstanden, die Druckverteilung in zumindest einem Bereich der Prozesskammer 3 so zu beeinflussen, dass sie im Zeitverlauf im Wesentlichen gleich bleibt. Der Druck ändert sich dabei in diesem Bereich bevorzugt um höchstens ± 5 mbar, mehr bevorzugt um ± 2 mbar, noch mehr bevorzugt um ± 1 mbar. Unter "im Wesentlichen Konstanthalten des Drucks in der Prozesskammer" wird auch verstanden, die Druckverteilung in zumindest einem Bereich der Prozesskammer 3 so zu beeinflussen, dass nach einer abrupten Änderung der Druckverhältnisse in der Prozesskammer 3 zumindest in diesem Bereich die vor der Änderung herrschende Druckverteilung im Wesentlichen wiederhergestellt wird. Dabei unterscheiden sich der Druck vor der abrupten Änderung und nach der Wiederherstellung bevorzugt um höchstens ± 5 mbar, mehr bevorzugt um ± 2 mbar, noch mehr bevorzugt um + 1 mbar.

Die Lasersinter- oder Laserschmelzvorrichtung 1 weist ebenfalls eine Druckkonstanthalteeinrichtung auf. In Fig. 2 ist die Druckkonstanthalteeinrichtung eine Gasauslasseinstelleinrichtung 36 zum Verändern der pro Zeiteinheit durch einen Gasauslass 361 aus der Vorrichtung strömenden Gasmenge. Der Gasauslass 361 ist dabei in Gasdurchflussrichtung hinter der Filtereinrichtung 35 und vor der Pumpeinrichtung 34 vorgesehen. Bei der Gasauslasseinstelleinrichtung 36 handelt es sich beispielsweise um ein Stetigventil, insbesondere ein Proportional- oder Servoventil.

Die Steuereinrichtung 29 ist ausgebildet, die Menge an Gas, die pro Zeiteinheit durch den Gasauslass 361 aus der Vorrichtung 1 ausströmt, so zu verändern, dass der Druck in der Prozesskammer 3 im Wesentlichen konstant bleibt. Dazu wird der Druck in der Prozesskammer 3 mittels einer Druckmesseinrichtung 200 gemessen und der so erhaltene Ist-Wert von der Steuereinrichtung 29 mit einem vorbestimmten Soll-Wert verglichen. Bei einer Abweichung zwischen Ist-Wert und Soll-Wert, die größer als eine vorbestimmte höchstzulässige Abweichung ist, wird die Gasauslasseinstelleinrichtung 36 von der Steuereinrichtung so eingestellt, dass der Ist-Wert des Drucks in der Prozesskammer 3 dem Soll-Wert angeglichen wird. Eine solche höchstzulässige Abweichung definiert (auch im Folgenden) die Bandbreite der Konstanthaltung des (Betriebs-)Druck in der Prozesskammer 3.

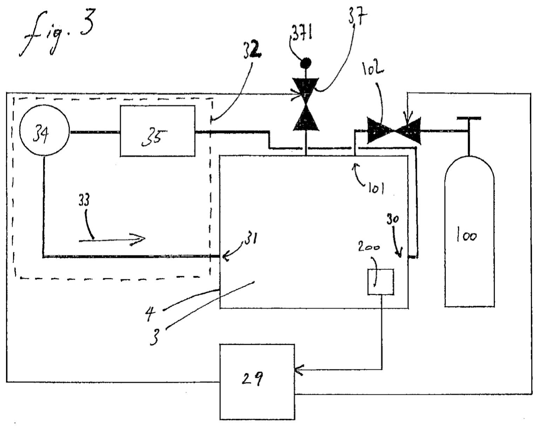

Fig. 3 zeigt ein Beispiel der Vorrichtung 1, die als Druckkonstanthalteeinrichtung eine Gasauslasseinstelleinrichtung 37 zum Verändern der pro Zeiteinheit durch einen Gasauslass 371 aus der Vorrichtung 1 ausströmenden Gasmenge aufweist. Der Gasauslass 371 ist dabei an der Prozesskammer 3 angebracht. Bei der Gasauslasseinstelleinrichtung 37 handelt es sich beispielsweise um ein Stetigventil, insbesondere ein Proportional- oder Servoventil.

Die Steuereinrichtung 29 ist ausgebildet, die Menge an Gas, die pro Zeiteinheit durch den Gasauslass 371 aus der Vorrichtung 1 ausströmt, mittels der Gasauslasseinstelleinrichtung 37 so zu verändern, dass der Druck in der Prozesskammer 3, der mittels einer Druckmesseinrichtung 200 gemessen wird, im Wesentlichen konstant bleibt. Dazu wird der Druck in der Prozesskammer 3 mittels einer Druckmesseinrichtung 200 gemessen und der so erhaltene Ist-Wert von der Steuereinrichtung 29 mit einem vorbestimmten Soll-Wert verglichen. Bei einer Abweichung zwischen Ist-Wert und Soll-Wert, die größer als eine vorbestimmte höchstzulässige Abweichung ist, wird die Gasauslasseinstelleinrichtung 37 von der Steuereinrichtung so eingestellt, dass der Ist-Wert des Drucks in der Prozesskammer 3 dem Soll-Wert angeglichen wird.

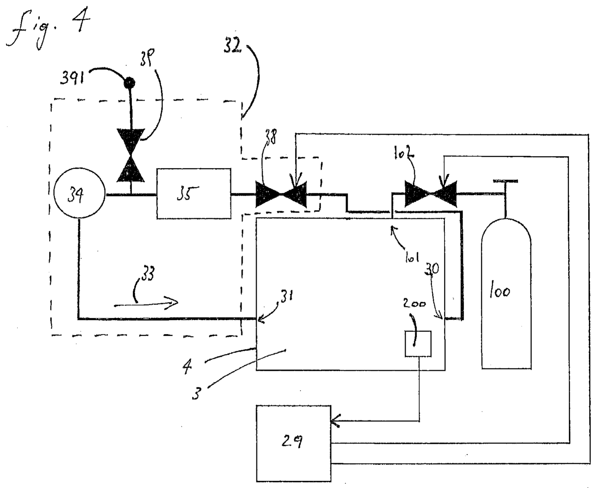

Fig. 4 zeigt ein Ausführungsbeispiel der erfindungsgemäßen Vorrichtung 1, die als Druckkonstanthalteeinrichtung eine Gasdurchflusseinstelleinrichtung 38 zum Ändern des Durchflusswiderstands der Umluftfiltereinrichtung 32 aufweist. Bei der Gasdurchflusseinstelleinrichtung 38 handelt es sich beispielsweise um eine Drosselklappe oder ein Stetigventil, insbesondere ein Proportional- oder Servoventil.

Die Steuereinrichtung 29 ist ausgebildet, den Durchflusswiderstand der Umluftfiltereinrichtung 32 mittels der Gasdurchflusseinstelleinrichtung 38 so zu verändern, dass der Druck in der Prozesskammer 3, der mittels einer Druckmesseinrichtung 200 gemessen wird, im Wesentlichen konstant bleibt. Dazu wird der Druck in der Prozesskammer 3 mittels einer Druckmesseinrichtung 200 gemessen und der so erhaltene Ist-Wert von der Steuereinrichtung 29 mit einem vorbestimmten Soll-Wert verglichen. Bei einer Abweichung zwischen Ist-Wert und Soll-Wert, die größer als eine vorbestimmte höchstzulässige Abweichung ist, wird die Gasdurchflusseinstelleinrichtung 38 von der Steuereinrichtung so verändert, dass der Ist-Wert des Drucks in der Prozesskammer 3 dem Soll-Wert angeglichen wird.

Es ist im Rahmen der Erfindung möglich, dass die Steuereinrichtung 29 so ausgebildet ist, dass sie die Menge an (von Sauerstoff verschiedenem) Gas, das pro Zeiteinheit von der Gaszufuhreinrichtung 100 in die Prozesskammer 3 gelangt, mittels der Gaszufuhreinstelleinrichtung 102 so verändert, dass die Sauerstoffkonzentration in der Prozesskammer 3 einen vorbestimmten Schwellenwert nicht überschreitet. Die Sauerstoffkonzentration in der Prozesskammer 3 wird dazu mittels einer Sauerstoffmesseinrichtung (in den Figuren nicht dargestellt) gemessen und der so erhaltene Ist-Wert von der Steuereinrichtung 29 mit dem vorbestimmten Schwellenwert verglichen. Bei einer Überschreitung des Schwellenwertes wird die Gaszufuhreinstelleinrichtung 102 von der Steuereinrichtung 29 so verändert, dass der Ist-Wert der Sauerstoffkonzentration niedriger ist als der Schwellenwert. Bei der Sauerstoffmesseinrichtung handelt es sich beispielsweise um einen amperometrischen Sauerstoffsensor.

Es ist im Rahmen der Erfindung auch möglich, die Gaszufuhreinstelleinrichtung 102 so einzustellen, dass pro Zeiteinheit eine im Wesentlichen konstante Menge an Gas von der Gaszufuhreinrichtung 100 in die Prozesskammer 3 gelangt.

Es ist im Rahmen der Erfindung schließlich auch möglich, die Steuerungseinrichtung 29 so auszubilden, dass die pro Zeiteinheit von der Gaszufuhreinrichtung 100 in die Prozesskammer 3 gelangende Gasmenge mittels der Gaszufuhreinstelleinrichtung 102 so verändert wird, dass der Druck in der Prozesskammer 3 im Wesentlichen konstant ist. Dazu wird der Druck in der Prozesskammer 3 mittels einer Druckmesseinrichtung 200 gemessen und der so erhaltene Ist-Wert von der Steuereinrichtung 29 mit einem vorbestimmten Soll-Wert verglichen. Bei einer Abweichung zwischen Ist-Wert und Soll-Wert, die größer als eine vorbestimmte höchstzulässige Abweichung ist, wird die Gaszufuhreinstelleinrichtung 102 von der Steuereinrichtung so verändert, dass der Ist-Wert des Drucks in der Prozesskammer 3 dem Soll-Wert angeglichen wird. In diesem Sinne kann auch die Gaszufuhreinstelleinrichtung 102 Teil der Druckkonstanthalteeinrichtung sein bzw. diese bilden.

Die erfindungsgemäße Vorrichtung 1 gemäß dem in Fig. 4 gezeigten Ausführungsbeispiel weist einen Gasauslass 391 auf, welcher in der Umluftfiltereinrichtung 32 zwischen der Filtereinrichtung 35 und der Pumpeinrichtung 34 vorgesehen ist. Optional ist zum Verändern der pro Zeiteinheit durch diesen Gasauslass 391 aus der Vorrichtung 1 ausströmenden Gasmenge eine Gasauslasseinstelleinrichtung 39 vorgesehen. Bei der Gasauslasseinstelleinrichtung 39 handelt es sich beispielsweise um ein Stetigventil, insbesondere ein Proportional- oder Servoventil.

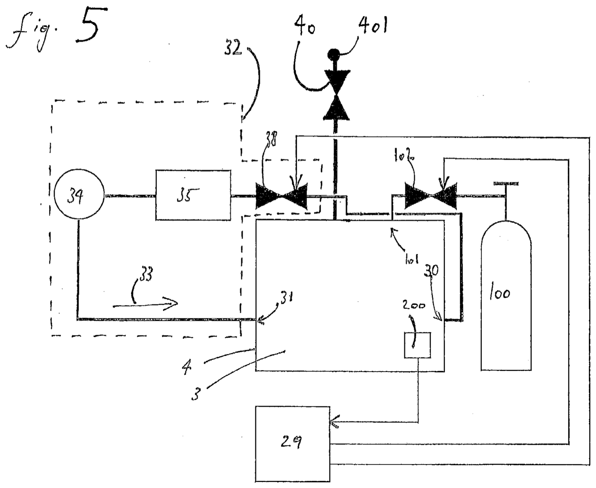

In Fig. 5 ist ein Ausführungsbeispiel der erfindungsgemäßen Vorrichtung gezeigt. Bei diesem ansonsten zu dem in Fig. 4 gezeigten Ausführungsbeispiel analogen Ausführungsbeispiel ist der Gasauslass 401 nicht zwischen Filtereinrichtung 35 und Pumpeinrichtung 34, sondern an der Prozesskammer 3 vorgesehen. Optional ist zum Verändern der pro Zeiteinheit durch diesen Gasauslass 401 aus der Vorrichtung 1 ausströmenden Gasmenge eine Gasauslasseinstelleinrichtung 40 vorgesehen. Bei der Gasauslasseinstelleinrichtung 40 handelt es sich beispielsweise um ein Stetigventil, insbesondere ein Proportional- oder Servoventil.

Im Betrieb der Lasersinter- oder Laserschmelzvorrichtung 1 wird zunächst zum Aufbringen einer Schicht des pulverförmigen Aufbaumaterials 15 der Träger 10 um eine Höhe abgesenkt, die bevorzugt der gewünschten Schichtdicke entspricht. Unter Verwendung der Beschichtungseinrichtung 16 wird nun eine Schicht des pulverförmigen Aufbaumaterials 15 aufgetragen. Die Aufbringung erfolgt zumindest über den gesamten Querschnitt des herzustellenden Objekts 2, vorzugsweise über das gesamte Baufeld 8. Anschließend wird der Querschnitt des herzustellenden Objekts 2 von dem Laserstrahl 22 abgetastet, sodass das pulverförmige Aufbaumaterial 15 an diesen Stellen verfestigt wird. Die Schritte werden so lange wiederholt, bis das Objekt 2 fertiggestellt ist und aus dem Behälter 5 entnommen werden kann.

Während des Herstellens des Objekts 2 wird der Prozesskammer 3 Gas zugeführt und es wird aus der Prozesskammer 3 Gas abgeführt. Die Prozesskammer 3 ist dazu über Öffnungen 30, 31 mit einer Umluftfiltereinrichtung 32 verbunden, wobei Gas durch die Öffnung 30 aus der Prozesskammer 3 in die Umluftfiltereinrichtung 32 gelangt und durch die Öffnung 31 aus der Umluftfiltereinrichtung 32 in die Prozesskammer 3 gelangt. Zusätzlich wird der Vorrichtung 1 zumindest zeitweise Gas aus einer Gaszufuhreinrichtung 100 zugeführt. Außerdem strömt zumindest zeitweise Gas aus der Vorrichtung 1 durch einen Gasauslass (361, 371, 391, 401) aus.

Es ist dabei vorteilhaft, wenn in dem Bereich der Prozesskammer 3, der über dem Baufeld 8 liegt, eine bevorzugt laminare Gasströmung ausgebildet wird, um Spratzer, Rauch, Kondensate sowie sonstige freigesetzte Stoffe effektiv aus diesem Bereich zu entfernen.

Im Allgemeinen wird als Gas ein Schutzgas gewählt, d.h. ein Gas, welches dem Aufbaumaterial gegenüber bei den beim Herstellen eines Objekts 2 herrschenden Bedingungen im Wesentlichen inert ist. Als Schutzgas kann beispielsweise ein Edelgas (Helium, Neon, Argon, Krypton, Xenon) oder Stickstoff verwendet werden. Auch die Verwendung von Wasserstoff oder einem anderen reduzierenden Gas, oder die Verwendung von (gereinigter und/oder getrockneter) Luft oder einem anderen oxidierenden Gas ist möglich. Auch Gemische verschiedener Gase können zum Einsatz kommen.

Gas wird einer Gaszufuhreinrichtung 100 entnommen und der Vorrichtung 1 über eine Öffnung 101, die beispielsweise an der Wandung 4 der Prozesskammer 3 angebracht ist, zugeführt. Die Zuführung von Gas kann dabei kontinuierlich erfolgen. Es ist im Rahmen der Erfindung möglich, die Menge des der Gaszufuhreinrichtung 100 entnommenen und der Vorrichtung 1 pro Zeiteinheit zugeführten Gases so zu regeln, dass die Sauerstoffkonzentration in der Prozesskammer 3 einen vorbestimmten Schwellenwert, beispielsweise 0,1 Volumen% bei Verwendung von Argon als Schutzgas, nicht überschreitet. Die Sauerstoffkonzentration in der Prozesskammer 3 wird dazu beispielsweise amperometrisch gemessen. Von der Umluftfiltereinrichtung 32 wird pro Zeiteinheit eine Menge an Gas umgewälzt, die größer, bevorzugt über zehnmal größer, besonders bevorzugt über hundertmal größer, ganz besonders bevorzugt über fünfhundertmal größer ist als die Menge an Gas, die pro Zeiteinheit aus der Gaszufuhreinrichtung 100 der Vorrichtung 1 zugeführt wird.

Im Betrieb setzen sich aus dem durch die Umluftfiltereinrichtung 32 hindurch beförderten Gas abzuscheidende Stoffe in der Filtereinrichtung 35 ab. Die Filtereinrichtung 35 verschmutzt dadurch und der Durchflusswiderstand der Filtereinrichtung 35 steigt allmählich an. Von Zeit zu Zeit wird daher die Filtereinrichtung 35 gereinigt. Dies erfolgt bevorzugt mittels eines Gasdruckstoßes, welcher in der der Gasdurchflussrichtung entgegen gesetzten Richtung durch die Filtereinrichtung 35 geführt wird. Im Rahmen der Erfindung ist auch ein Reinigen der Filtereinrichtung 35 durch Rütteln und/oder Abschaben möglich. Wenn die Filtereinrichtung 35 mehrere in Gasdurchflussrichtung hintereinander liegende Filter aufweist, wird mindestens eines dieser Filter zum Reinigen der Filtereinrichtung 35 gereinigt, bevorzugt werden alle Filter zum Reinigen der Filtereinrichtung 35 gereinigt. In Folge der Reinigung der Filtereinrichtung 35 sinkt der Durchflusswiderstand der Filtereinrichtung 35.

Der Druck in der Prozesskammer 3 wird mittels einer Druckmesseinrichtung 200 gemessen. Die Druckmesseinrichtung 200 liefert dabei ein vom Druck in der Prozesskammer 3 abhängiges Signal an die Steuereinrichtung 29. Der Druck in der Prozesskammer 3 wird so geregelt, dass er unabhängig vom Durchflusswiderstand der Filtereinrichtung 35 im Wesentlichen konstant ist, d.h. in einem Intervall um einen vorgegebenen Soll-Wert liegt,, wobei dieses Intervall bevorzugt Soll-Wert ± 5 mbar, mehr bevorzugt Soll-Wert ± 2 mbar, noch mehr bevorzugt Soll-Wert ± 1 mbar ist.

Es ist vorteilhaft, die Lasersinter- oder Laserschmelzvorrichtung 1 so zu betreiben, dass in der Prozesskammer 3 und in allen Teilen der Umluftfiltereinrichtung 32 sowie in allen Leitungen zwischen der Prozesskammer 3 und der Umluftfiltereinrichtung 32 ein Druck herrscht, der größer ist als der Umgebungsdruck. Ein derartiger Überdruck verhindert, dass Umgebungsluft durch Leckagen in die Vorrichtung 1 eindringt. Ein Eindringen von Luft in die Vorrichtung 1 ist im Allgemeinen unerwünscht, da mit der Luft aus der Umgebung störende Gase, beispielsweise Sauerstoff, Kohlenstoffdioxid oder Wasserdampf in jeweils zu großer Menge, in das Innere der Vorrichtung 1 gelangen.

Im Betrieb einer Lasersinter- oder Laserschmelzvorrichtung 1 gemäß dem in Fig. 2 dargestellten Beispiel verändert die Steuereinrichtung 29 mittels der Gasauslasseinstelleinrichtung 36 die Menge an Gas, die pro Zeiteinheit durch einen Gasauslass 361 an die Umgebung abgegeben wird, derart, dass der Druck in der Prozesskammer 3 im Wesentlichen konstant ist.

Dabei wird in einer konkreten Ausführungsform der Erfindung als Gas Argon verwendet. Während pro Minute beispielsweise ca. 5 m³ Gas durch die Umluftfiltereinrichtung 32 umgewälzt werden, liegt die pro Minute aus einer beispielsweise als Gaszufuhreinrichtung 100 dienenden Argon-Gasflasche der Prozesskammer 3 über eine Öffnung 101 in der Prozesskammerwandung 4 zugeführte Gasmenge beispielsweise zwischen 1 dm³ und 10 dm³. (Angaben für Gasvolumina beziehen sich auf einen Druck von 1 bar.) Damit lässt sich in der Prozesskammer 3 beispielsweise während des Herstellens eines Objekts 2 ein Überdruck zwischen einem Mindestwert von 28 mbar und einem Höchstwert von 32 mbar relativ zum Umgebungsdruck aufrecht erhalten. Während und nach der Reinigung der Filtereinheit 35 mittels eines Gasdruckstoßes wird dabei die Herstellung eines Objekts 2 unterbrochen, bis der Druck in der Prozesskammer 3 wieder einen Wert zwischen dem Mindestwert und dem Höchstwert erreicht hat.

Im Betrieb einer Lasersinter- oder Laserschmelzvorrichtung 1 gemäß dem in Fig. 3 dargestellten Beispiel verändert die Steuereinrichtung 29 mittels der Gasauslasseinstelleinrichtung 37 die Menge an Gas, die pro Zeiteinheit durch einen Gasauslass 371 an die Umgebung abgegeben wird, derart, dass der Druck in der Prozesskammer 3 im Wesentlichen konstant ist.

Im Betrieb einer Lasersinter- oder Laserschmelzvorrichtung 1 gemäß dem in Fig. 4 oder Fig. 5 dargestellten Ausführungsbeispiel verändert die Steuereinrichtung 29 den Durchflusswiderstand der Umluftfiltereinrichtung 32 mittels der Gasdurchflusseinstelleinrichtung 38 so, dass der Druck in der Prozesskammer 3 unabhängig vom Durchflusswiderstand der Umluftfiltereinrichtung 32 im Wesentlichen konstant ist. Die Menge des pro Zeiteinheit durch die Gasauslasseinstelleinrichtung 39, 40 abgegebenen Gases wird dabei im Wesentlichen konstant gehalten

Um den Druck in der Prozesskammer 3 im Wesentlichen konstant zu halten, wird im Rahmen der Erfindung in Betracht gezogen, dass die Druckkonstanthalteeinrichtung aus einem oder mehreren der folgenden Elemente besteht: Gaszufuhreinstelleinrichtung 102, Gasauslasseinstelleinrichtung 36, Gasauslasseinstelleinrichtung 37, Gasdurchflusseinstelleinrichtung 38 und Gasauslasseinstelleinrichtung 39.

Auch wenn die vorliegende Erfindung anhand einer Lasersinter- oder Laserschmelzvorrichtung 1 beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines Aufbaumaterials 15 angewendet werden. Das Aufbaumaterial 15 kann dabei pulverförmig sein, wie es beispielsweise beim Lasersintern oder Laserschmelzen der Fall ist. Als pulverförmiges Aufbaumaterial 15 können verschiedene Arten von Pulver verwendet werden, insbesondere Metallpulver, Kunststoffpulver, Keramikpulver, Sand, gefüllte oder gemischte Pulver. Das Aufbaumaterial 15 kann aber auch flüssig sein, wie es beispielsweise bei den unter dem Namen "Stereolithografie" bekannten Verfahren der Fall ist.

Die Verfestigungseinrichtung 20 kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Bestrahlungseinrichtung 20 jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise auch andere Lichtquellen, Elektronenstrahlquellen oder jede andere Energie- bzw. Strahlenquelle verwendet werden, die geeignet ist, das Aufbaumaterial zu verfestigen. Insbesondere kann das Belichten auch mit einem verfahrbaren Zeilenbelichter durchgeführt werden. Auch auf das selektive Maskensintern, bei dem eine ausgedehnte Lichtquelle und eine Maske verwendet werden, oder auf das High-Speed-Sintern (HSS), bei dem auf das Aufbaumaterial selektiv ein Material aufgebracht wird, das die Strahlungsabsorption an den dem Objektquerschnitt entsprechenden Stellen erhöht (Absorptionssintern) oder verringert (Inhibitionssintern), und dann großflächig oder mit einem verfahrbaren Zeilenbelichter belichtet wird, kann die Erfindung angewendet werden.

## Patentansprüche

1. Vorrichtung (1) zum Herstellen eines dreidimensionalen Objekts (2) durch schichtweises Verfestigen von Aufbaumaterial (15) an den dem Querschnitt des herzustellenden Objekts (2) in einer jeweiligen Schicht entsprechenden Stellen mit
einer Prozesskammer (3), in der das Objekt durch selektives Verfestigen von Schichten eines Aufbaumaterials (15) in einem Baufeld (8) schichtweise aufzubauen ist,
einer Gaszufuhreinrichtung (100) und
einer Umluftfiltereinrichtung (32), die mindestens eine Filtereinrichtung (35) und eine Pumpeinrichtung (34) aufweist, wobei eine Filtereinrichtung (35) abreinigbar ist,
wobei die Vorrichtung eine Druckkonstanthalteeinrichtung, die ausgebildet ist, den Druck in der Prozesskammer (3) im Wesentlichen konstant zu halten, aufweist, und die Druckkonstanthalteeinrichtung derart ausgebildet ist, den Druck in der Prozesskammer (3) innerhalb von höchstens 10 Sekunden nach Abreinigung der Filtereinrichtung (35) derart zu ändern, dass er im Wesentlichen denselben Wert hat wie vor der Abreinigung, und
wobei die Vorrichtung (1) eine Steuereinrichtung (29) aufweist, die ausgebildet ist, die pro Zeiteinheit von der Gaszufuhreinrichtung (100) in die Prozesskammer (3) einströmende Gasmenge und die pro Zeiteinheit aus der Vorrichtung (1) ausströmende Gasmenge und den Durchflusswiderstand der Gasdurchflusseinstelleinrichtung (38) mithilfe der Druckkonstanthalteeinrichtung derart zu verändern, dass der Druck in der Prozesskammer (3) im Wesentlichen konstant ist.

2. Vorrichtung (1) gemäß Anspruch 1,
wobei die Filtereinrichtung (35) durch einen der Gasdurchflussrichtung entgegengesetzten Gasdruckstoß abreinigbar ist.

3. Vorrichtung (1) gemäß einem der Ansprüche 1 bis 2,
wobei die Vorrichtung (1) eine Verfestigungseinrichtung (20) zum Verfestigen von Aufbaumaterial (15) in der jeweiligen Schicht an dem Querschnitt des Objekts entsprechenden Positionen im Baufeld (8) aufweist, welche eine Bestrahlungseinrichtung (21) zum Ausstrahlen von elektromagnetischer Strahlung, insbesondere Laser-Strahlung, und/oder zum Ausstrahlen von Teilchenstrahlung auf in der jeweiligen Schicht des Aufbaumaterials (15) dem Querschnitt des Objekts (2) entsprechende Positionen im Baufeld (8) aufweist.

4. Vorrichtung (1) gemäß einem der Ansprüche 1 bis 3,
wobei die Vorrichtung (1) eine Beschichtungseinrichtung (16) aufweist, die ausgebildet ist, eine Schicht des Aufbaumaterials (15), insbesondere pulverförmigen Aufbaumaterials (15), auf das Baufeld (8) aufzubringen.

5. Vorrichtung (1) gemäß einem der Ansprüche 1 bis 4,
wobei die Druckkonstanthalteeinrichtung eine Gaszufuhreinstelleinrichtung (102) zum Verändern der pro Zeiteinheit von der Gaszufuhreinrichtung (100) in die Prozesskammer (3) einströmenden Gasmenge aufweist.

6. Vorrichtung (1) gemäß einem der Ansprüche 1 bis 5,
wobei die Druckkonstanthalteeinrichtung eine Gasauslasseinstelleinrichtung (36, 37, 39, 40) zum Verändern der pro Zeiteinheit durch einen Gasauslass (361, 371, 391, 401) aus der Vorrichtung (1) ausströmenden Gasmenge aufweist.

7. Vorrichtung (1) gemäß einem der Ansprüche 1 bis 6,
wobei ein Gasauslass (361, 371, 391, 401) an der Prozesskammer (3) angebracht ist.

8. Vorrichtung (1) gemäß einem der Ansprüche 1 bis 7,
wobei ein Gasauslass (361, 371, 391, 401) in der Strömungsrichtung des Gases durch die Umluftfiltereinrichtung (32) hinter der Filtereinrichtung (35) angeordnet ist.

9. Vorrichtung (1) gemäß einem der Ansprüche 1 bis 8,
wobei die Druckkonstanthalteeinrichtung eine der Umluftfiltereinrichtung (32) zugeordnete Gasdurchflusseinstelleinrichtung (38) mit veränderbarem Durchflusswiderstand aufweist.

10. Vorrichtung (1) gemäß Anspruch 9,
wobei die Umluftfiltereinrichtung (32) mindestens eine Filtereinrichtung (35) und eine Pumpeinrichtung (34) aufweist,
wobei die der Umluftfiltereinrichtung (32) zugeordnete Gasdurchflusseinstelleinrichtung (38) in Stömungsrichtung des Gases durch die Umluftfiltereinrichtung (32) vor der Pumpeinrichtung (34), insbesondere nach der Filtereinrichtung (35), angeordnet ist.

11. Vorrichtung (1) gemäß einem der Ansprüche 1 bis 10,
wobei die Vorrichtung (1) eine Druckmesseinrichtung (200) zum Messen des Drucks in der Prozesskammer (3) aufweist.

12. Verfahren zum Herstellen eines dreidimensionalen Objekts (2) durch schichtweises Verfestigen von Aufbaumaterial (15) an den dem Querschnitt des herzustellenden Objekts (2) in einer jeweiligen Schicht entsprechenden Stellen in einer Vorrichtung (1) mit
einer Prozesskammer (3), in der das Objekt (2) durch selektives Verfestigen von Schichten eines Aufbaumaterials (15) in einem Baufeld (8) schichtweise aufgebaut wird,
einer Gaszufuhreinrichtung (100) und
einer Umluftfiltereinrichtung (32), die mindestens eine Filtereinrichtung (35) und eine Pumpeinrichtung (34) aufweist, wobei eine Filtereinrichtung (35) abreinigbar ist,
wobei die Vorrichtung eine Druckkonstanthalteeinrichtung aufweist, die den Druck in der Prozesskammer (3) im Wesentlichen konstant hält, und die Druckkonstanthalteeinrichtung derart ausgebildet ist, den Druck in der Prozesskammer (3) innerhalb von höchstens 10 Sekunden nach Abreinigung der Filtereinrichtung (35) derart zu ändern, dass er im Wesentlichen denselben Wert hat wie vor der Abreinigung
wobei die Vorrichtung (1) eine Steuereinrichtung (29) aufweist, die ausgebildet ist, die pro Zeiteinheit von der Gaszufuhreinrichtung (100) in die Prozesskammer (3) einströmende Gasmenge und die pro Zeiteinheit aus der Vorrichtung (1) ausströmende Gasmenge und den Durchflusswiderstand der Gasdurchflusseinstelleinrichtung (38) mithilfe der Druckkonstanthalteeinrichtung derart zu verändern, dass der Druck in der Prozesskammer (3) im Wesentlichen konstant ist.

## Claims

1. Device (1) for manufacturing a three-dimensional object (2) by solidifying building material (15), layer-by-layer, at the positions corresponding to the cross-section of the object (2) to be manufactured in a respective layer, comprising
a process chamber (3), in which the object is to be built layer-by-layer by selectively solidifying layers of a building material (15) in a build area (8),
a gas supply device (100), and
a recirculating air filter device (32) that comprises at least one filter device (35) and a pump device (34), wherein the filter device (35) is cleanable,
wherein the device comprises a pressure maintaining device configured to maintain the pressure in the process chamber (3) substantially constant, and the pressure maintaining device is configured to vary the pressure in the process chamber (3) within at most 10 seconds after cleaning the filter device (35) such that it has substantially the same value as before the cleaning,
wherein the device (1) comprises a control device (29), which is configured to vary the amount of gas flowing from the gas supply device (100) into the process chamber (3) per unit of time and the amount of gas flowing out of the device (1) per unit of time and the flow resistance of the gas through-flow adjusting device (38) via the pressure maintaining device such that the pressure in the process chamber (3) is substantially constant.

2. Device (1) according to claim 1,
wherein the filter device (35) is cleanable by a gas pressure pulse opposite to the gas through-flow direction.

3. Device (1) according to any one of claims 1 to 2,
wherein the device (1) comprises a solidification device (20) for solidifying building material (15) in the respective layer at positions in the build area (8) corresponding to the cross-section of the object, which comprises an irradiation device (21) for emitting electromagnetic radiation, in particular laser radiation, and/or for emitting particle radiation, to positions in the build area (8) corresponding to the cross-section of the object (2) in the respective layer of the building material (15).

4. Device (1) according to any one of claims 1 to 3,
wherein the device (1) comprises a recoating device (16), which is configured to apply a layer of the building material (15), in particular of building material (15) in powder form, to the build area (8).

5. Device (1) according to any one of claims 1 to 4,
wherein the pressure maintaining device comprises a gas supply adjusting device (102) for varying the amount of gas flowing from the gas supply device (100) into the process chamber (3) per unit of time.

6. Device (1) according to any one of claims 1 to 5,
wherein the pressure maintaining device comprises a gas outlet adjusting device (36, 37, 39, 40) for varying the amount of gas flowing out of the device (1) per unit time through a gas outlet (361, 371, 391, 401).

7. Device (1) according to any one of claims 1 to 6,
wherein a gas outlet (361, 371, 391, 401) is arranged at the process chamber (3).

8. Device (1) according to any one of claims 1 to 7,
wherein a gas outlet (361, 371, 391, 401) is arranged behind the filter device (35) in the direction of flow of the gas through the recirculating air filter device (32).

9. Device (1) according to any one of claims 1 to 8,
wherein the pressure maintaining device comprises a gas through-flow adjusting device (38) with variable flow resistance and being associated with the recirculating air filter device (32).

10. Device (1) according to claim 9,
wherein the recirculating air filter device (32) comprises at least one filter device (35) and a pump device (34),
wherein the gas through-flow adjusting device (38) associated with the recirculating air filter device (32) is arranged ahead of the pump device (34), in particular behind the filter device (35), in the direction of flow of the gas through the recirculating air filter device (32).

11. Device (1) according to any one of claims 1 to 10,
wherein the device (1) comprises a pressure measuring device (200) for measuring the pressure in the process chamber (3).

12. Method for manufacturing a three-dimensional object (2) by solidifying building material (15), layer-by-layer, at the positions corresponding to the cross-section of the object (2) to be manufactured in a respective layer in a device (1) comprising
a process chamber (3), in which the object (2) is built layer-by-layer by selectively solidifying layers of a building material (15) in a build area (8),
a gas supply device (100) and
a recirculating air filter device (32) that comprises at least one filter device (35) and a pump device (34), wherein the filter device (35) is cleanable,
wherein the device comprises a pressure maintaining device which maintains the pressure in the process chamber (3) substantially constant, and the pressure maintaining device is configured to vary the pressure in the process chamber (3) within at most 10 seconds after cleaning the filter device (35) such that it has substantially the same value as before the cleaning,
wherein the device (1) comprises a control device (29), which is configured to vary the amount of gas flowing from the gas supply device (100) into the process chamber (3) per unit of time and the amount of gas flowing out of the device (1) per unit of time and the flow resistance of the gas through-flow adjusting device (38) via the pressure maintaining device such that the pressure in the process chamber (3) is substantially constant.

## Revendications

1. Dispositif (1) de fabrication d'un objet tridimensionnel (2) par solidification couche par couche de matériau de construction (15) dans les emplacements correspondant à la section transversale de l'objet (2) à fabriquer dans une couche respective avec
une chambre de traitement (3), dans laquelle l'objet est à construire couche par couche par solidification sélective de couches d'un matériau de construction (15) dans un champ de construction (8),
un équipment d'amenée de gaz (100) et
un équipement de filtrage d'air ambiant (32), qui comporte au moins un équipement de filtrage (35) et un équipement de pompage (34), dans lequel un équipement de filtrage (35) peut être nettoyé,
dans lequel le dispositif comporte un équipement de maintien constant de la pression, qui est conçu pour maintenir essentiellement constante la pression dans la chambre de traitement (3), et l'équipement de maintien constant de la pression est conçu pour modifier la pression dans la chambre de traitement (3) en l'espace de 10 secondes maximum après nettoyage de l'équipement de filtrage (35) de sorte qu'elle ait essentiellement la même valeur qu'avant le nettoyage, et
dans lequel le dispositif (1) comporte un équipement de contrôle (29), qui est conçu pour modifier, à l'aide de l'équipement de maintien constant de la pression, la quantité de gaz entrant par unité de temps depuis l'équipement d'amenée de gaz (100) jusque dans la chambre de traitement (3) et la quantité de gaz sortant par unité de temps depuis le dispositif (1) et la résistance à l'écoulement de l'équipement de réglage de l'écoulement de gaz (38), de sorte que la pression dans la chambre de traitement (3) soit essentiellement constante.

2. Dispositif (1) selon la revendication 1,
dans lequel l'équipement de filtrage (35) peut être nettoyé par un choc de pression de gaz en sense inverse de la direction d'écoulement de gaz.

3. Dispositif (1) selon l'une des revendications 1 à 2,
dans lequel le dispositif (1) comporte un équipement de solidification (20) pour solidifier un matériau de construction (15) dans la couche respective en des positions correspondant à la section transversale de l'objet dans le champ de construction (8), lequel comporte un équipement d'irradiation (21) pour diffuser un rayonnement électromagnétique, en particulier un rayonnement laser, et/ou pour diffuser un rayonnement de particules sur des positions correspondant à la section transversale de l'objet (2) dans le champ de construction (8) dans la couche respective du matériau de construction (15).

4. Dispositif (1) selon l'une des revendications 1 à 3,
dans lequel le dispositif (1) comporte un équipement de revêtement (16) qui est conçu pour appliquer une couche du matériau de construction (15), en particulier un matériau de construction pulvérulent (15), sur le champ de construction (8).

5. Dispositif (1) selon l'une des revendications 1 à 4,
dans lequel l'équipement de maintien constant de la pression comporte un équipement de réglage de l'amenée de gaz (102) pour modifier la quantité de gaz entrant par unité de temps depuis l'équipement d'amenée de gaz (100) jusque dans la chambre de traitement (3).

6. Dispositif (1) selon l'une des revendications 1 à 5,
dans lequel l'équipement de maintien constant de la pression comporte un équipement de réglage d'évacuation de gaz (36, 37, 39, 40) pour modifier la quantité de gaz sortant par unité de temps à travers une évacuation de gaz (361, 371, 391, 401) depuis le dispositif (1).

7. Dispositif (1) selon l'une des revendications 1 à 6,
dans lequel une évacuation de gaz (361, 371, 391, 401) est disposée contre la chambre de traitement (3).

8. Dispositif (1) selon l'une des revendications 1 à 7,
dans lequel une évacuation de gaz (361, 371, 391, 401) est agencée derrière l'équipement de filtrage (35) dans la direction d'écoulement du gaz à travers l'équipement de filtrage d'air ambiant (32).

9. Dispositif (1) selon l'une des revendications 1 à 8,
dans lequel l'équipement de maintien constant de la pression comporte un équipement de réglage d'écoulement de gaz (38) attribué à l'équipement de filtrage d'air ambiant (32) avec une résistance à l'écoulement modifiable.

10. Dispositif (1) selon la revendication 9,
dans lequel l'équipement de filtrage d'air ambiant (32) comporte au moins un équipement de filtrage (35) et un équipement de pompage (34),
dans lequel l'équipement de réglage d'écoulement de gaz (38) attribué à l'équipement de filtrage d'air ambiant (32) est agencé avant l'équipement de pompage (34), en particulier après l'équipement de filtrage (35), dans la direction d'écoulement du gaz à travers l'équipement de filtrage d'air ambiant (32).

11. Dispositif (1) selon l'une des revendications 1 à 10,
dans lequel le dispositif (1) comporte un équipement de mesure de pression (200) pour mesurer la pression dans la chambre de traitement (3).

12. Procédé de fabrication d'un objet tridimensionnel (2) par solidification couche par couche d'un matériau de construction (15) dans les emplacements correspondant à la section transversale de l'objet (2) à fabriquer dans une couche respective dans un dispositif (1) avec
une chambre de traitement (3), dans laquelle l'objet (2) est construit couche par couche dans un champ de construction (8) par solidification sélective de couches d'un matériau de construction (15),
un équipment d'amenée de gaz (100) et
un équipement de filtrage d'air ambiant (32), qui comporte au moins un équipement de filtrage (35) et un équipement de pompage (34), dans lequel un équipement de filtrage (35) peut être nettoyé,
dans lequel le dispositif comporte un équipement de maintien constant de la pression, qui maintient essentiellement constante la pression dans la chambre de traitement (3), et l'équipement de maintien constant de la pression est conçu pour modifier la pression dans la chambre de traitement (3) en l'espace de 10 secondes maximum après nettoyage de l'équipement de filtrage (35) de sorte qu'elle ait essentiellement la même valeur qu'avant le nettoyage,
dans lequel le dispositif (1) comporte un équipement de contrôle (29), qui est conçu pour modifier, à l'aide de l'équipement de maintien constant de la pression, la quantité de gaz entrant par unité de temps depuis l'équipement d'amenée de gaz (100) jusque dans la chambre de traitement (3) et la quantité de gaz sortant par unité de temps depuis le dispositif (1) et la résistance à l'écoulement de l'équipement de réglage de l'écoulement de gaz (38), de sorte que la pression dans la chambre de traitement (3) soit essentiellement constante.
